# EUROPEAN PATENT SPECIFICATION

(11) **EP 4 430 471 B1**
(45) Date of publication and mention of the grant of the patent: **07.10.2026**
(21) Application number: 22813587.7
(22) Date of filing: 08.11.2022
(51) Int. Cl.: G06F 8/65

(54) **METHOD FOR UPDATING AN AUTOMATIC DOOR SYSTEM AS WELL AS AUTOMATIC DOOR SYSTEM**
VERFAHREN ZUR AKTUALISIERUNG EINES AUTOMATISCHEN TÜRSYSTEMS SOWIE AUTOMATISCHES TÜRSYSTEM
PROCÉDÉ DE MISE À JOUR D'UN SYSTÈME DE PORTE AUTOMATIQUE ET SYSTÈME DE PORTE AUTOMATIQUE

(30) Priority: 09.11.2021 SE 2130298
(43) Date of publication of application: 18.09.2024
(73) Proprietor: ASSA ABLOY Entrance Systems AB, 261 22 Landskrona (SE)
(72) Inventor: HAURI, Marco, 8854 Galgenen (CH)
(74) Representative: Flach Bauer & Partner Patentanwälte mbB
(86) International application number: PCT/EP2022/081147
(87) International publication number: WO 2023/083817

(56) References cited:
- WO-A1-2016/180484
- US-A1- 2018 157 482
- ANONYMOUS: "Patch (computing) - Wikipedia", 2 November 2021 (2021-11-02), pages 1 - 10, XP093252925, Retrieved from the Internet <URL:https://en.wikipedia.org/w/index.php?title=Patch_(computing)&oldid=1053168895> [retrieved on 20250221]

## Description

The invention concerns a method for updating an automatic door system as well as an automatic door system.

Automatic door systems, for example at buildings, are well known in the art. Today, automatic door systems often comprise a door control unit that drives the drive unit for actuating the actual door leafs. These door control units run a firmware which, just like any other piece of software, needs updates from time to time. Further, door systems are known that comprise a sensor including a camera, wherein the sensors have a control unit separate from the one of the door control unit.

Software updates are known in other fields of technology. WO 2016/180484 A1 and US 2018/0157482 A1 of the same patent family disclose to a method of updating software in a people conveyor system, particularly in an elevator system. The method comprises the steps of providing an updated version of the safety related software, storing the updated version of the software in a safety unit of the people conveyer system, and activating the updated version of the software. The step of starting the software update includes operating a software update activation switch permanently associated with the people conveyer system. CRC checks are carried out during the procedure to assure that copying processes have been carried our successfully and completely.

To perform such a firmware update, it is necessary that a service technician trained to service the automatic door system is present at the specific automatic door system to supervise the update process and to verify that the door operates as it should be after the firmware has been updated.

Due to the special training needed by the service technician, firmware updates are expensive, time-consuming and - as the service technician has to drive to the automatic door system - have environmental costs.

It is therefore the object of the invention to provide a method for updating an automatic door system as well as an automatic door system that allows firmware updates to be performed more time efficient and environmentally friendly.

For this purpose, a method for updating an automatic door system according to claim 1 is provided. The door system comprises a door with at least one door component, in particular a movable door leaf, and at least one drive unit for actuating the at least one door component. The automatic door system further comprises a door control unit for controlling the drive unit, and a safety sensor having a safety control unit, wherein at least the door control unit is running with a deprecated firmware. The method comprises the following steps:
- the safety control unit receives an update package including a firmware update to a current firmware at least for the door control unit,
- the safety control unit initiates an update process of the firmware of the door control unit from the deprecated firmware to the current firmware, and
- the safety control unit controls the update process of the firmware of the door control unit and, if an abort condition is detected during the update process, the safety control unit sets the door control unit back to the deprecated firmware.

The safety control unit determines a suitable point in time for initiating the update process of the firmware of the door control unit. Thus, the update process is initiated automatically.

It has been recognized by the inventors, that the safety control unit present in the safety sensor can be used to provide the necessary supervision of the update of the firmware of the door control unit, as it is an independent control unit of the door control unit. Thus, enabling the safety sensor to perform the necessary supervision, it is not necessary for the service technician to drive to the automatic door system in person or to supervise the update process at all. Thus, update processes can be performed easier and environmentally friendly.

A firmware update may be understood as to include the entire code of the current firmware, a patch to replace only parts of the code of the firmware and/or an installer to execute the change of code.

An abort condition may be a software error during the update process, any condition that casts doubt on the correct operation of the door system, or any condition that does not allow for the door system to be inoperative for the time necessary to complete the update process.

In an embodiment, the update package includes a firmware update for the safety control unit, wherein the safety control unit performs an update process of its firmware, in particular before initiating the update process of the firmware of the door control unit. This way, also the firmware of the safety control unit may be updated.

For example, if an abort condition is detected during the update process of the firmware of the safety control unit, the safety control unit is set back to the deprecated firmware.

It is conceivable that the update process of the firmware of the door control unit is initiated at a later point in time after the update process of the firmware of the safety control unit has been completed. Thus, the duration at which the door is inoperative at a time is reduced.

In an aspect, the update process of the firmware of the door control unit and/or of the safety control unit includes a reboot of the door control unit or the safety control unit, respectively, and/or a verification of the correct operation of the door so that critical tasks are performed during the supervised update process and it is ensured that the door is fully operational.

To ensure the safety even in unforeseen situations, if the update process of the firmware of the safety control unit leaves the safety control unit permanently inoperative, the door control unit may switch to a safe operating mode.

For example, in the safe operating mode the door is always open.

In order to mitigate problems before the update has been started, prior to initiating any update process, the safety control unit may verify the received update package with respect to its authenticity, completeness, damages and/or correctness, in particular cryptographically.

In an aspect, the safety control unit determines a suitable point in time for initiating the update process of the firmware of the safety control unit. Thus, the update process is initiated automatically.

According to the invention, the safety sensor comprises a camera, wherein the field of view of the camera includes the door component and/or the track of the door, wherein the camera captures at least one recording of the field of view, the safety control unit evaluates the captured recording and sends instructions to the door control unit to operate the door based on the captured recording, improving the safety of the door system.

In order to improve the safety also during an update process, the safety control unit may detect an abort condition based on the recording captured by the camera.

According to the invention, the safety sensor determines the suitable point in time for initiating the update process of the firmware of the door control unit and/or of the safety control unit based on the recording captured by the camera, wherein the following steps are performed for the determination of a suitable point in time:
- the safety sensor estimates based on the recording the length of time that the door will not be used,
- the safety sensor determines whether the length of time exceeds the time necessary to complete the update process of the firmware of the door control unit or of the safety control unit, and
- if so, the safety sensor initiates the update process of the firmware of the door control unit or of the safety control unit, respectively.

The time necessary to complete the update process may be included as information in the update package and/or determined by the safety control unit based on the firmware update.

Further, during presence of an abort condition, update processes are preferably not initiated.

In an aspect, during the update process of the door control unit, the safety sensor continues to estimate the length of time that the door will not be used based on at least one further recording captured, and if the length of time decreases below the time remaining to complete the update process of the door control unit, an abort condition is detected. This way, unforeseen behavior of persons can be taken into account.

In an embodiment, the verification of the correct operation of the door is performed by the safety sensor based on the recording captured by the camera, in particular the following steps are performed for the verification of the correct operation of the door:
- the safety control unit instructs the door control unit to operate the door component to perform a specific test movement,
- the camera captures a recording,
- the safety control unit recognizes the actual movement of the door component in the recording and evaluates whether the actual movement corresponds to the test movement, and
- if the actual movement corresponds to the test movement, the verification is successful and, if the actual movement does not correspond to the test movement, the verification is not successful constituting an abort condition.

By using an automated verification, even the verification can be performed without the need for a trained service technician.

After having received the instructions, the door control unit may attempt to operate the door component according to the instructions, wherein the camera captures a recording of the attempt.

To improve the safety during an update process even further, the safety control unit may recognize the presence of a supervisor at the door based on the further recording captured, wherein the absence of a supervisor constitutes an abort condition, and/or wherein the safety control unit may recognize a person approaching the door based on the further recording captured, wherein a person approaching the door constitutes an abort condition.

The supervisor is not regarded as a "person approaching the door" in this case.

The supervisor may be an untrained person (with respect to the door system), for example a janitor or a superintendent of the building the door system is installed in.

For precise and efficient evaluations, the safety control unit may comprise an adaptive deterministic algorithm, a machine learning algorithm, a support vector machine and/or a trained artificial neural network, configured and/or trained to recognize an abort condition, a hazard, a person, a supervisor and/or the actual movement of the door component in the captured recording, and/or configured and/or trained to estimate the length of time that the door will not be used based on the captured recording.

In an embodiment, the safety control unit receives the update package via a wireless or wired connection, in particular from a remote sever or from a mobile device in the vicinity of the door system, so that the update packages are distributed easily.

For example, the mobile device is only temporarily connected to the safety control unit.

For above mentioned purpose, an automatic door system is provided comprising at least one door component, in particular a movable door leaf, at least one drive unit for actuating the at least door component, a door control unit for controlling the drive unit, and a safety sensor having a safety control unit, wherein the door system is configured to carry out the method as described above, in particular wherein the safety sensor comprises a camera.

The features and advantages mentioned with respect to the method also apply to the automatic door system and vice versa.

Further features and advantages will be apparent from the following description as well as the accompanying drawings, to which reference is made. In the drawings:
- Fig. 1:: shows schematically an automatic door system according to the invention, and
- Fig. 2:: shows a flowchart of a method according to the invention.

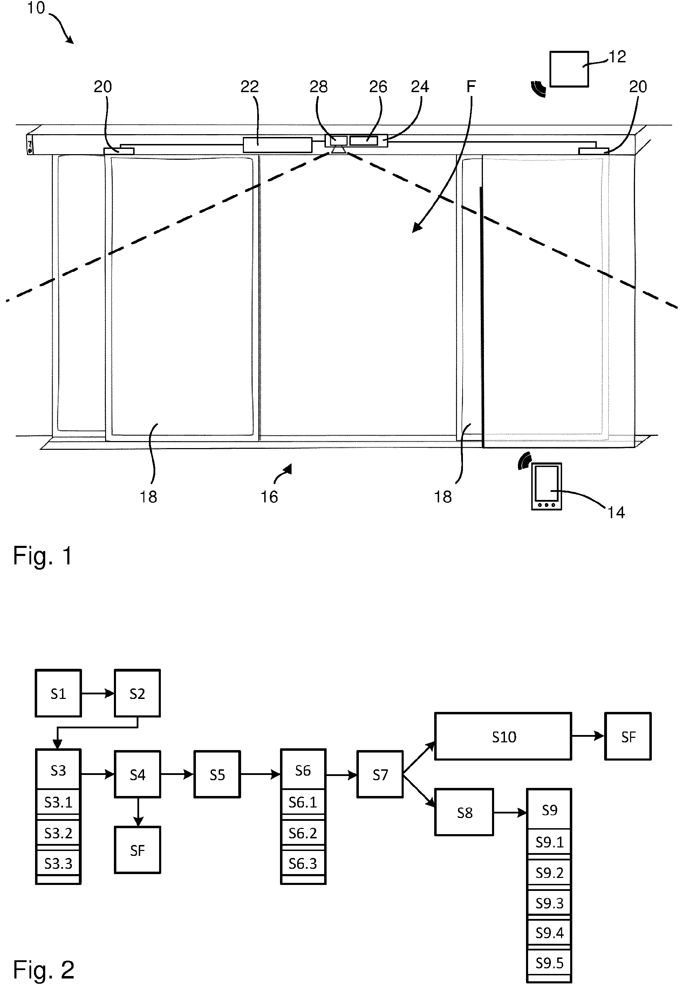

Figure 1 shows schematically an automatic door system 10 according to the invention, a remote server 12 and a mobile device 14.

The automatic door system 10 has a door 16 with at least one door component 18, a drive unit 20, a door control unit 22 and a safety sensor 24.

In the shown embodiment, the door 16 is a sliding door with two door components 18 being movable door leafs. Thus, also two drive units 20 are provided.

The door 16 may as well be a swing door, a revolving door, a folding door or the like. The method of operation remains the same.

The safety sensor 24 and the drive unit 20 are connected to the door control unit 22, wherein the door control unit 22 is configured to control the drive unit 20.

Each of the drive units 20 is associated with one of the door components 18 and is designed to move the respective door component 18 along a track. The door components 18 may be moved individually from one another.

In particular, the door components 18 are movable such that between them a passage can be opened, wherein the width of the passage is adjustable by the door control unit 22.

The door control unit 22 is, for example, an embedded system running a firmware.

The safety sensor 24 comprises a safety control unit 26 and a camera 28.

The camera 28 is located above the door 16 and monitors the track of the door 16, i.e. the movement path of the door components.

The camera 28 may be a single camera, a stereo camera, a time-of-flight 3D camera, an event camera or a plurality of cameras.

The field of view F of the camera 28 includes the track of the door 16, in particular the track of the door leafs.

The field of view F of the camera 28 may cover an area of up to 5 m, preferably up to 7 m, more preferably still up to 10 m in front of the door 16, measured on the ground.

The safety sensor 24 is an integral part of the safety functionality of the door system 10. Mainly, the camera 28 monitors the track of the door 16, i.e. the movement path of the door leafs, and forwards the recording to the safety control unit 26. The safety control unit 26 instructs the door control unit 22 to ensure that the door 16 is operated safely. In particular, to ensure that persons, for example vulnerable persons such as children or elderly people, present in the track of the door 16 are not touched or even harmed by a movement of the door component 18.

Further, the safety sensor 24 is configured to detect persons wishing to pass the door 16.

The camera 28 captures at least one recording, for example a single picture, a series of pictures and or a video, of the field of view F and transmits the recording to the safety control unit 26.

The safety control unit 26 evaluates the captured recording and, based on the recording, sends instructions to the door control unit 22 to operate the door 16 accordingly.

For example, safety control unit 26 determines whether or not persons are present in the field of view F of the camera, i.e. the recording, and whether or not a person desires to pass the door 16. If so, the safety control unit 26 instructs the door control unit 22 to open the door 16.

Then the door control unit 22 drives the drive units 20 to create the desired motion of the respective door component 18 to open the door.

To this end, the safety control unit 26 may comprise an adaptive deterministic algorithm, a machine learning algorithm, a support vector machine and/or a trained artificial neural network, configured and/or trained to recognize persons in the recording that desire to pass the door 16.

The safety control unit 26 may also be an embedded system running a firmware.

It is to be noted that the safety control unit 26 and door control unit 22 are separate control units with different purposes and running different firmware.

In particular, the safety control unit 26 and the door control unit 22 operate independently from one another so that one may be operative while the other reboots or is inoperative. However, the automatic door system 10 has only the full range of functions if both the safety control unit 26 and the door control unit 22 are operative and are working together.

The safety control unit 26 is connected to the remote server 12 and/or to the mobile device 14.

The remote server 12 is, for example, a server connected to the internet located at a remote location from the automatic door system 10.

It is also conceivable, that the remote server 12 is located on the same premise as the automatic door system 10.

The connection of the safety control unit 26 to the remote server 12 may be a wired connection or a wireless connection in the sense that the safety control unit 26 has established a wireless connection to a gateway in the vicinity of the automatic door system 10, which is in turn connected, for example via the Internet, to the remote server 12.

On the remote server 12, update packages including a firmware update for the safety control unit 26 and or the door control unit 22 are stored.

The update packages include, for example, as a firmware update the entire code of the current version of the firmware to replace the entire code of the firmware on the respective control unit 22, 26. It is also possible, that the firmware update includes only parts of the code of the firmware so that only parts of the code of the firmware are updated. Further, the firmware update may include an installer to execute the change of code.

The mobile device 14 may be a laptop, a tablet, a smart phone or any other smart device. The mobile device 14 may belong to a service technician, a janitor, a superintendent of the building the door system 10 is installed in or any other person authorized to initiate a firmware update of the door system 10.

The mobile device 14 is brought into the vicinity of the automatic door system 10 and is connected to the safety control unit 26 either that wirelessly, for example using Wi-Fi, Bluetooth or the like, or via a cable.

Just like the remote server 12 the mobile device 14 has firmware updates stored within. As the mobile device 14 will be carried away from the owner afterwards, the mobile device 14 is connected to the safety control unit 26 only temporarily.

The firmware of the safety control unit 26 as well as the firmware of the door control unit 22 may become deprecated as newer versions of the firmware become available. Thus, firmware updates become necessary.

To update the firmware of the door control unit and of the safety control unit 26 to the current firmware, the method according to the invention as illustrated in Figure 2 is performed. Figure 2 shows a flowchart of the method according to the invention.

In a first step S1, the safety control unit 26 receives at least one update package including a firmware update from the remote server 12 or from a connected mobile device 14. The transmission of the update package may be initiated by the safety control unit 26, the remote server 12 or the mobile device 14.

The update package comprises in this example a firmware update for the safety control unit 26 as well as a firmware update for the door control unit 22.

In a second step S2, the safety control unit verifies the received update packages with respect to the authenticity, the completeness, any damages and/or correctness.

This verification may be done cryptographically, for example using hashes, as known in the art.

If the verification has been successful, the safety control unit 26 initiates the update process.

In the explained example, the update process of the safety control unit 26 itself is performed first before the update process of the door control unit 22.

It is also conceivable, that the update process of the door control unit 22 is performed first or that only one of the update process is performed at all, if the update package includes only a firmware update for one of the two control units 22, 26.

In the next step S3, the safety control unit 26 begins to wait for a suitable point in time at which the update process may be performed without compromising the safety of the door system 10.

To this end, the safety control unit 26 determines the suitable point in time for initiating the actual update process of its firmware from the deprecated firmware to the current firmware.

To this end, the safety control unit 26 evaluates the recordings captured by the camera 28 to determine whether or not enough time until the next usage of the door 16 will be available for the update.

For example, the safety sensor 24 evaluates the recordings of the camera 28 with respect to any persons in the field of view that might want to pass the door. This condition is broader than the condition to send instructions to the door control unit 22 to open the door 16 as even persons for the away than person waiting to pass the door immediately are taken into consideration. The safety control unit 26 then determines the length of time that the door 16 will not be used, i.e. the length of time that that persons, if acting normally, would not come into the vicinity of the door component 18 (step S3.1).

Before, simultaneously or afterwards, the safety control unit 26 determines the time necessary to complete the update process of the firmware of itself. This may be done by evaluating the update package. The time necessary to complete the update process may be included as additional information apart from the code of the firmware and/or an installer in the update package (step 3.2).

The safety control unit 26 then compares the estimated length of time that the door 16 will not be used with the time necessary to complete the update process and if the time necessary to complete the update process is smaller, the safety control unit 26 determines that the current point in time is suitable to initiate the update process of itself (step S3.3).

Then, in step S4 and if no abort condition is present, as will be explained later, the safety control unit 26 initiates the update process of itself.

The update process of the firmware of the safety control unit 26 includes writing the current firmware contained in the update packages in the memory of the safety control unit 26 and rebooting the safety control unit 26. During this update process, at least until the reboot is completed, the safety control unit 26 is inoperative. Usually the update process takes about 20 to 30 seconds.

During the update process of the safety control unit 26, the door control unit 22 or a supervising module of the safety control unit 26 monitor the update process with respect to the occurrence of abort conditions.

An abort condition may be a software error during the update process, for example of the safety control unit 26 has crashed during the update process, any condition that casts doubt on the correct operation of the door system 10, or if the time available for the update runs out.

If abort condition is detected, the update process of the firmware of the safety control unit 26 is aborted, meaning that the deprecated firmware is reinstalled setting the safety control unit 26 back to the latest version of the firmware that had worked properly.

During the time of the update process of the firmware of the safety control unit 26 that the safety control unit 26 is inoperative, the door control unit 22 may switch to a safe operating mode. A safe operating mode may be realized by operating the drive unit 20 open the door 16 fully, in particular with a very slow speed of the door component 18. The door 16 is then kept open until the door control unit 22 leaves the safe operating mode.

Further, if the update process of the firmware of the safety control unit fails to the extent that leaves the safety control unit 26 permanently inoperative, the door control unit 22 also switches to the safe operation mode. Once the reboot of the safety control unit 26 has been completed, the update process of the firmware of the safety control unit 26 is also complete. Thus, the update process of the door control unit 22 may be initiated.

The update process of the firmware of the door control unit 22 is controlled fully by the safety control unit 26, in particular with regards to the time at which the update process of the firmware of the door control unit 22 is initiated.

The update process of the door control unit 22 does not have to be initiated right after the completion of the update process of the firmware of the safety control unit 26 but the firmware update of the door control unit 22 may be performed at a later point in time.

In step S6, the safety control unit 26 determines a suitable point in time for initiating the update process of the door control unit 22.

The determination of a suitable point in time for the update process of the firmware of the door control unit 22 is very similar to the one explained in step S3 for the determination of the suitable point in time for the update process of the firmware of the safety control unit 26.

As explained above, the safety control unit 26 estimates based on the recordings of the camera 28 the length of time that the door 16 will not be used (step S6.1), determines (steps S6.2, S6.3) whether or not this time exceeds the time necessary to complete the update process of the door control unit 22 (which may also be given as information in the update package and/or is determined by the safety control unit 26). If enough time is available, the safety sensor 24 determines that it is a suitable point in time for initiating the update process of the firmware of the door control unit 22.

Further, it may be necessary by laws or regulations, that a supervisor must be present at the door 16 to prevent persons to come close to the door. The supervisor does not need to be a trained service technician of the door system 10, but may be an untrained person with respect to the door system 10, for example a janitor or a superintendent of the building the door system 10 is installed in.

If the presence of such a supervisor is necessary, the safety control unit 26 determines based on the recording of the camera whether or not a supervisor is present in the vicinity of the door six (step S7).

If the point in time is suitable and the or the supervisor is present in the vicinity of the door 16, the safety control unit 26 may initiate the update process of the firmware of the door control unit 22 (step S8).

The update process of the firmware of the door control unit 22 is very similar to the update process of the firmware of the safety control unit 26. In particular, it includes times in which the door control unit 22 is inoperative, in particular due to a reboot of the door control unit 22.

Further, the update process of the firmware of the door control unit 22 may include also the verification of the correct operation of the door 16 after the actual firmware has been updated and/or a reboot has been performed.

The verification of the correct operation at the door 16 may be performed by the safety control unit 26 (step S9).

The verification by the safety control unit 26 may be based on recordings received from the camera 28.

For example, the verification of the correct operation of the door may include that the safety control unit 26 instructs the door control unit 22 to operate the door 16 in a certain way, i.e. so that the door component 18 performs a specific movement, called test movement in the following (S9 .1).

The door control unit 22 may then attempt to operate the door 16, in particular the door component18 according to the instructions, using the drive unit 20 (step S9.2).

Thus, the door control unit 22 drives the drive unit 20 so that, under correct operation, the door component 18 will perform the test movement instructed by the safety control unit 26.

In the meantime, the camera 28 captures a recording or continues to capture a recording at least during the time the door control unit 22 attempts to operate the door 16 according to the instructions of the safety control unit 26 (step S9.3)

The recordings are transmitted to the safety control unit 26 and in step S9.4 the recordings are evaluated by the safety control unit 26. To this end, the safety control unit 26 recognizes the actual movement of the door components 18 of the door 16 in response to the instruction given to the door control unit 22 and evaluate whether the actual movement derived from the recordings correspond to the test movement (step S9.5)

If the actual movement corresponds to the test movement, the verification is successful and the update process of the firmware of the door control unit 22 is complete and the door control unit 22 runs with the current firmware.

If the actual movement does not correspond to the test movement, the verification is not successful constituting an abort condition.

In this case, the court safety control unit 26 sets the door control unit 22 back to the deprecated firmware, i.e. the firmware used before the firmware update.

During the whole update process of the firmware of the door control unit 22, the safety control unit 26 monitors the process for the occurrence of an abort condition (step S10).

The abort condition may be of the same type as explained with respect to the firmware update of the safety control unit 26. Abort conditions may be detected based on the recordings captured by the camera 28 during the update process.

For example, the safety sensor 24, in particular the safety control unit 26 and the camera 28 continue to estimate the length of time that the door will not be used based on at least one further recording, in particular a continuous recording during the update process.

If the length of time that the door 16 will not be used decreases during the update process below the time remaining to complete the update process of the door control unit 22, an abort condition is detected. The time remaining to complete the update process may be determined by the safety control unit 26.

Further, if a supervisor is mandatory for the update process to be performed, the safety control unit 26 determines based on further recordings captured, whether or not a supervisor is still present in the vicinity of the door 16.

The absence of a supervisor or a detected inattention of the supervisor to his duty of preventing persons to past the door, constitutes an abort condition leading to the abort of the update process.

Further, the safety control unit 26 recognizes whether or not a person approaches the door based on the further recordings captured, wherein the presence of a person approaching the door also constitutes an abort condition.

Of course, in this case, only persons not being the supervisor are taken into account.

If the time that the door 16 will not be used is smaller than the remaining time of the update, this constitutes an abort condition. In this case, it is not allowed that the door 16 is inoperative for the time necessary to complete the update process.

If the safety control unit 26 comprises an adaptive deterministic algorithm, a machine learning algorithm, a support vector machine and/or a trained artificial neural network, it may be configured or trained to recognize the above abort conditions, in particular a hazard, a person, the supervisor and/or the actual movement of the door component 18 in the captured recording.

The adaptive deterministic algorithm, the machine learning algorithm the support vector machine, and/or the trained artificial neural network may be configured and/or trained to estimate the length of time that the door 16 will not be used based on the captured recordings of the camera 28.

If the verification in step S9 has been successful without the occurrence of abort condition, the automatic door system 10 has been successfully updated to the current firmware.

This process has been performed without the need of a trained service technician. Thus, it is not necessary for a service technician to drive to the automatic door system 10, reducing environmental impact and saving time. Supervision may, if necessary, be performed by an untrained person with respect to the automatic door system 10.

Thus, updating an automatic door system 10 can be carried out in a much easier and more cost-efficient way.

It is possible, that the update package only includes an update for the firmware of the safety control unit 26 or the firmware of the door control unit 22. In these cases, steps S6 to as 10 or steps S3 to S5, respectively, are omitted.

## Claims

1. Method for updating an automatic door system (10), wherein the door system (10) comprises a door (16) with at least one door component (18), in particular a movable door leaf and at least one drive unit (20) for actuating the at least one door component (18), a door control unit (22) for controlling the drive unit (20), and a safety sensor (24) having a safety control unit (26), wherein at least the door control unit (22) is running with a deprecated firmware, wherein the method comprises the following steps:
- the safety control unit (26) receives an update package including a firmware update to a current firmware at least for the door control unit (22),
- the safety control unit (26) initiates an update process of the firmware of the door control unit (22) from the deprecated firmware to the current firmware, and
- the safety control unit (26) controls the update process of the firmware of the door control unit (22) and, if an abort condition is detected during the update process, the safety control unit (26) sets the door control unit (22) back to the deprecated firmware,
wherein the safety control unit (26) determines a suitable point in time for initiating the update process of the firmware of the door control unit (22),
wherein the safety sensor (24) comprises a camera (28), wherein the field of view (F) of the camera (28) includes the door component (18) and/or the track of the door (16), wherein the camera (28) captures at least one recording of the field of view (F), the safety control unit (26) evaluates the captured recording and sends instructions to the door control unit (22) to operate the door component (18) based on the captured recording,
**characterized in that** the safety sensor (24) determines a suitable point in time for initiating the update process of the firmware of the door control unit (22) and/or of the safety control unit (26) based on the recording captured by the camera (28), wherein the following steps are performed for the determination of a suitable point in time:
- the safety sensor (24) estimates based on the recording the length of time that the door (16) will not be used,
- the safety sensor (24) determines whether the length of time exceeds the time necessary to complete the update process of the firmware of the door control unit (22) or of the safety control unit (26), and
- if so, the safety sensor (24) initiates the update process of the firmware of the door control unit (22) or of the safety control unit (26), respectively.

2. Method according to claim 1, **characterized in that** the update package includes a firmware update for the safety control unit (26), wherein the safety control unit (26) performs an update process of its firmware, in particular before initiating the update process of the firmware of the door control unit (22).

3. Method according to claim 1 or 2, **characterized in that** the update process of the firmware of the door control unit (22) and/or of the safety control unit (26) includes a reboot of the door control unit (22) or the safety control unit (26), respectively, and/or a verification of the correct operation of the door (16).

4. Method according to any one of the preceding claims, **characterized in that**, if the update process of the firmware of the safety control unit (26) leaves the safety control unit (26) permanently inoperative, the door control unit (22) switches to a safe operating mode.

5. Method according to any one of the preceding claims, **characterized in that**, prior to initiating any update process, the safety control unit (26) verifies the received update package with respect to its authenticity, completeness, damages and/or correctness, in particular cryptographically.

6. Method according to any one of the preceding claims, **characterized in that** the safety control unit (26) detects an abort condition based on the recording captured by the camera (28).

7. Method according to any one of the preceding claims, **characterized in that** during the update process of the door control unit (22), the safety sensor (24) continues to estimate the length of time that the door (16) will not be used based on at least one further recording captured, if the length of time decreases below the time remaining to complete the update process of the door control unit (22), an abort condition is detected.

8. Method according to any one of the claims 3 to 7, if referring to claim 3, **characterized in that** the verification of the correct operation of the door (16) is performed by the safety sensor (24) based on the recording captured by the camera (28), in particular the following steps are performed for the verification of the correct operation of the door (16):
- the safety control unit (26) instructs the door control unit (22) to operate the door component (18) to perform a specific test movement,
- the camera (28) captures a recording,
- the safety control unit (26) recognizes the actual movement of the door component (18) in the recording and evaluates whether the actual movement corresponds to the test movement, and
- if the actual movement corresponds to the test movement, the verification is successful and, if the actual movement does not correspond to the test movement, the verification is not successful constituting an abort condition.

9. Method according to any one of the preceding claims, **characterized in that** the safety control unit (26) recognizes the presence of a supervisor at the door (16) based on the further recording captured, wherein the absence of a supervisor constitutes an abort condition, and/or wherein the safety control unit (26) recognizes a person approaching the door based on the further recording captured, wherein a person approaching the door constitutes an abort condition.

10. Method according to any one of the preceding claims, **characterized in that** the safety control unit (26) comprises an adaptive deterministic algorithm, a machine learning algorithm, a support vector machine and/or a trained artificial neural network, configured and/or trained to recognize an abort condition, a hazard, a person, a supervisor and/or the actual movement of the door component (18) in the captured recording, and/or configured and/or trained to estimate the length of time that the door (16) will not be used based on the captured recording.

11. Method according to any one of the preceding claims, **characterized in that** the safety control unit (26) receives the update package via a wireless or wired connection, in particular from a remote sever (12) or from a mobile device (14) in the vicinity of the door system (10).

12. Automatic door system comprising at least one door component (18), in particular a movable door leaf, at least one drive unit (20) for actuating the at least door component (18), a door control unit (22) for controlling the drive unit (20), and a safety sensor (24) having a safety control unit (26), wherein the door system (10) is configured to carry out the method according to any one of the preceding claims, in particular wherein the safety sensor (24) comprises a camera (28).

## Patentansprüche

1. Verfahren zur Aktualisierung eines automatischen Türsystems (10), wobei das Türsystem (10) Folgendes umfasst: eine Tür (16) mit zumindest einer Türkomponente (18), insbesondere einem beweglichen Türflügel, und zumindest eine Antriebseinheit (20) zum Betätigen der zumindest einen Türkomponente (18), eine Türsteuereinheit (22) zur Steuerung der Antriebseinheit (20) sowie einen Sicherheitssensor (24) mit einer Sicherheitssteuereinheit (26), wobei zumindest die Türsteuereinheit (22) mit einer veralteten Firmware läuft, wobei das Verfahren die folgenden Schritte umfasst:
- die Sicherheitssteuereinheit (26) empfängt ein Aktualisierungspaket, das eine Firmwareaktualisierung auf eine aktuelle Firmware zumindest für die Türsteuereinheit (22) enthält,
- die Sicherheitssteuereinheit (26) leitet einen Aktualisierungsvorgang der Firmware der Türsteuereinheit (22) von der veralteten Firmware auf die aktuelle Firmware ein, und
- die Sicherheitssteuereinheit (26) steuert den Aktualisierungsvorgang der Firmware der Türsteuereinheit (22) und falls während des Aktualisierungsvorgangs eine Abbruchbedingung erkannt wird, versetzt die Sicherheitssteuereinheit (26) die Türsteuereinheit (22) zurück auf die veraltete Firmware,
wobei die Sicherheitssteuereinheit (26) einen geeigneten Zeitpunkt für das Einleiten des Aktualisierungsvorgangs der Firmware der Türsteuereinheit (22) bestimmt,
wobei der Sicherheitssensor (24) eine Kamera (28) umfasst, wobei das Sichtfeld (F) der Kamera (28) die Türkomponente (18) und/oder die Bahn der Tür (16) umfasst, wobei die Kamera (28) zumindest eine Aufnahme des Sichtfeld (F) aufnimmt, die Sicherheitssteuereinheit (26) die aufgenommene Aufnahme auswertet und Anweisungen an die Türsteuereinheit (22) sendet, um die Türkomponente (18) auf der Grundlage der aufgenommenen Aufnahme zu betätigen,
**dadurch gekennzeichnet, dass** der Sicherheitssensor (24) einen geeigneten Zeitpunkt für das Einleiten des Aktualisierungsvorgangs der Firmware der Türsteuereinheit (22) und/oder der Sicherheitssteuereinheit (26) auf der Grundlage der von der Kamera (28) aufgenommenen Aufnahme bestimmt, wobei zur Bestimmung eines geeigneten Zeitpunkts die folgenden Schritte durchgeführt werden:
- der Sicherheitssensor (24) schätzt auf der Grundlage der Aufnahme die Zeitspanne, in der die Tür (16) nicht genutzt wird,
- der Sicherheitssensor (24) bestimmt, ob die Zeitspanne die Zeit überschreitet, die zum Abschluss des Aktualisierungsvorgangs der Firmware der Türsteuereinheit (22) oder der Sicherheitssteuereinheit (26) erforderlich ist, und
- falls ja, leitet der Sicherheitssensor (24) den Aktualisierungsvorgang der Firmware der Türsteuereinheit (22) bzw. der Sicherheitssteuereinheit (26) ein.

2. Verfahren nach Anspruch 1, **dadurch gekennzeichnet, dass** das Aktualisierungspaket eine Firmwareaktualisierung für die Sicherheitssteuereinheit (26) enthält, wobei die Sicherheitssteuereinheit (26) einen Aktualisierungsvorgang ihrer Firmware durchführt, insbesondere vor dem Einleiten des Aktualisierungsvorgangs der Firmware der Türsteuereinheit (22).

3. Verfahren nach Anspruch 1 oder 2, **dadurch gekennzeichnet, dass** der Aktualisierungsvorgang der Firmware der Türsteuereinheit (22) und/oder der Sicherheitssteuereinheit (26) einen Neustart der Türsteuereinheit (22) bzw. der Sicherheitssteuereinheit (26) und/oder eine Überprüfung der korrekten Funktion der Tür (16) umfasst.

4. Verfahren nach einem der vorstehenden Ansprüche, **dadurch gekennzeichnet, dass**, falls der Aktualisierungsvorgang der Firmware der Sicherheitssteuereinheit (26) dazu führt, dass die Sicherheitssteuereinheit (26) dauerhaft außer Betrieb ist, die Türsteuereinheit (22) in einen sicheren Betriebsmodus wechselt.

5. Verfahren nach einem der vorstehenden Ansprüche, **dadurch gekennzeichnet, dass** die Sicherheitssteuereinheit (26) vor dem Einleiten eines Aktualisierungsvorgangs das empfangene Aktualisierungspaket hinsichtlich seiner Authentizität, Vollständigkeit, Beschädigungen und/oder Korrektheit, insbesondere kryptografisch, überprüft.

6. Verfahren nach einem der vorstehenden Ansprüche, **dadurch gekennzeichnet, dass** die Sicherheitssteuereinheit (26) auf der Grundlage der von der Kamera (28) aufgenommenen Aufnahme eine Abbruchbedingung erkennt.

7. Verfahren nach einem der vorstehenden Ansprüche, **dadurch gekennzeichnet, dass** während des Aktualisierungsvorgangs der Türsteuereinheit (22) der Sicherheitssensor (24) die Zeitspanne, in der die Tür (16) nicht genutzt wird, auf der Grundlage zumindest einer weiteren aufgenommenen Aufnahme weiter schätzt; wenn die Zeitspanne unter die verbleibende Zeit zum Abschluss des Aktualisierungsvorgangs der Türsteuereinheit (22) sinkt, eine Abbruchbedingung erkannt wird.

8. Verfahren nach einem der Ansprüche 3 bis 7, im Falle eines Bezugs auf Anspruch 3, **dadurch gekennzeichnet, dass** die Überprüfung der korrekten Funktion der Tür (16) durch den Sicherheitssensor (24) auf der Grundlage der von der Kamera (28) aufgenommenen Aufnahme erfolgt, wobei insbesondere die folgenden Schritte zur Überprüfung der korrekten Funktion der Tür (16) durchgeführt werden:
- die Sicherheitssteuereinheit (26) weist die Türsteuereinheit (22) an, die Türkomponente (18) so zu betätigen, dass eine bestimmte Testbewegung durchgeführt wird,
- die Kamera (28) nimmt eine Aufnahme auf,
- die Sicherheitssteuereinheit (26) erkennt die tatsächliche Bewegung der Türkomponente (18) in der Aufnahme und bewertet, ob die tatsächliche Bewegung der Testbewegung entspricht, und
- wenn die tatsächliche Bewegung der Testbewegung entspricht, ist die Überprüfung erfolgreich, wenn die tatsächliche Bewegung nicht der Testbewegung entspricht, ist die Überprüfung nicht erfolgreich, was eine Abbruchbedingung darstellt.

9. Verfahren nach einem der vorstehenden Ansprüche, **dadurch gekennzeichnet, dass** die Sicherheitssteuereinheit (26) die Anwesenheit einer Aufsichtsperson an der Tür (16) auf der Grundlage der weiter aufgenommenen Aufnahme erkennt, wobei die Abwesenheit einer Aufsichtsperson eine Abbruchbedingung darstellt, und/oder wobei die Sicherheitssteuereinheit (26) auf der Grundlage der weiter aufgenommenen Aufnahme eine sich der Tür nähernde Person erkennt, wobei eine sich der Tür nähernde Person eine Abbruchbedingung darstellt.

10. Verfahren nach einem der vorstehenden Ansprüche, **dadurch gekennzeichnet, dass** die Sicherheitssteuereinheit (26) Folgendes umfasst: einen adaptiven deterministischen Algorithmus, einen Algorithmus des maschinellen Lernens, eine Support-Vektor-Maschine und/oder ein trainiertes künstliches neuronales Netzwerk, das so konfiguriert und/oder trainiert ist, dass es eine Abbruchbedingung, eine Gefahr, eine Person, eine Aufsichtsperson und/oder die tatsächliche Bewegung der Türkomponente (18) in der aufgenommenen Aufnahme erkennt, und/oder so konfiguriert und/oder trainiert ist, dass es die Zeitspanne abschätzt, in der die Tür (16) nicht genutzt wird, und zwar auf der Grundlage der aufgenommenen Aufnahme.

11. Verfahren nach einem der vorstehenden Ansprüche, **dadurch gekennzeichnet, dass** die Sicherheitssteuereinheit (26) das Aktualisierungspaket über eine drahtlose oder drahtgebundene Verbindung empfängt, insbesondere von einem entfernten Server (12) oder von einem mobilen Gerät (14) in der Umgebung des Türsystems (10).

12. Automatisches Türsystem, umfassend zumindest eine Türkomponente (18), insbesondere einen beweglichen Türflügel, zumindest eine Antriebseinheit (20) zum Betätigen der zumindest einen Türkomponente (18), eine Türsteuereinheit (22) zum Steuern der Antriebseinheit (20) sowie einen Sicherheitssensor (24) mit einer Sicherheitssteuereinheit (26), wobei das Türsystem (10) konfiguriert ist, um das Verfahren nach einem der vorstehenden Ansprüche durchzuführen, insbesondere wobei der Sicherheitssensor (24) eine Kamera (28) umfasst.

## Revendications

1. Procédé de mise à jour d'un système de porte automatique (10), le système de porte (10) comprenant une porte (16) dotée d'au moins un composant de porte (18), notamment un vantail mobile, et au moins une unité d'actionnement (20) destinée à actionner l'au moins un composant de porte (18), une unité de commande de porte (22) destinée à commander l'unité d'actionnement (20), et un capteur de sécurité (24) présentant une unité de commande de sécurité (26), au moins l'unité de commande de porte (22) fonctionnant avec un micrologiciel obsolète, le procédé comprenant les étapes suivantes :
- l'unité de commande de sécurité (26) reçoit un progiciel de mise à jour comprenant une mise à jour de micrologiciel vers une version actuelle de micrologiciel, concernant au moins l'unité de commande de porte (22),
- l'unité de commande de sécurité (26) lance un processus de mise à jour du micrologiciel de l'unité de commande de porte (22), pour passer du micrologiciel obsolète à la version actuelle de micrologiciel, et
- l'unité de commande de sécurité (26) commande le processus de mise à jour du micrologiciel de l'unité de commande de porte (22) et, si une condition d'interruption est détectée au cours de ce processus, l'unité de commande de sécurité (26) rétablit l'unité de commande de porte (22) vers le micrologiciel obsolète ;
l'unité de commande de sécurité (26) déterminant un moment approprié pour lancer le processus de mise à jour du micrologiciel de l'unité de commande de porte (22),
le capteur de sécurité (24) comprenant une caméra (28), le champ de vision (F) de la caméra (28) comprenant le composant de porte (18) et/ou le rail de la porte (16), la caméra (28) capturant au moins un enregistrement du champ de vision (F), l'unité de commande de sécurité (26) évaluant l'enregistrement capturé et envoyant des instructions à l'unité de commande de porte (22) afin de mouvoir le composant de porte (18) en fonction de l'enregistrement capturé ;
**caractérisé en ce que** le capteur de sécurité (24) détermine un moment approprié pour lancer le processus de mise à jour du micrologiciel de l'unité de commande de porte (22) et/ou de l'unité de commande de sécurité (26) en fonction de l'enregistrement capturé par la caméra (28), les étapes suivantes étant effectuées pour la détermination d'un moment approprié :
- le capteur de sécurité (24) estime, en fonction de l'enregistrement, la durée pendant laquelle la porte (16) ne sera pas utilisée,
- le capteur de sécurité (24) détermine si la durée dépasse le temps nécessaire pour mener à bien le processus de mise à jour du micrologiciel de l'unité de commande de porte (22) ou de l'unité de commande de sécurité (26), et
- si tel est le cas, le capteur de sécurité (24) lance le processus de mise à jour respectif du micrologiciel de l'unité de commande de porte (22) ou de l'unité de commande de sécurité (26).

2. Procédé selon la revendication 1, **caractérisé en ce que** le progiciel de mise à jour comprend une mise à jour de micrologiciel concernant l'unité de commande de sécurité (26), l'unité de commande de sécurité (26) effectuant un processus de mise à jour de son micrologiciel, notamment avant de lancer le processus de mise à jour du micrologiciel de l'unité de commande de porte (22).

3. Procédé selon la revendication 1 ou 2, **caractérisé en ce que** le processus de mise à jour du micrologiciel de l'unité de commande de porte (22) et/ou de l'unité de commande de sécurité (26) comprend un redémarrage de l'unité de commande de porte (22) ou de l'unité de commande de sécurité (26) respective, et/ou une vérification du bon fonctionnement de la porte (16).

4. Procédé selon l'une quelconque des revendications précédentes, **caractérisé en ce que**, si le processus de mise à jour du micrologiciel de l'unité de commande de sécurité (26) rend l'unité de commande de sécurité (26) définitivement hors service, l'unité de commande de porte (22) passe en mode de fonctionnement sécurisé.

5. Procédé selon l'une quelconque des revendications précédentes, **caractérisé en ce que**, avant de lancer tout processus de mise à jour, l'unité de commande de sécurité (26) vérifie le progiciel de mise à jour reçu quant à son authenticité, son intégralité, son intégrité et/ou sa justesse, notamment par des moyens cryptographiques.

6. Procédé selon l'une quelconque des revendications précédentes, **caractérisé en ce que** l'unité de commande de sécurité (26) détecte une condition d'interruption en fonction de l'enregistrement capturé par la caméra (28).

7. Procédé selon l'une quelconque des revendications précédentes, **caractérisé en ce que**, pendant le processus de mise à jour de l'unité de commande de porte (22), le capteur de sécurité (24) continue d'estimer la durée pendant laquelle la porte (16) ne sera pas utilisée en fonction d'au moins un enregistrement supplémentaire capturé, et si cette durée passe en dessous du temps restant pour achever le processus de mise à jour de l'unité de commande de porte (22), une condition d'interruption est détectée.

8. Procédé selon l'une quelconque des revendications 3 à 7, dans la mesure où elle dépend de la revendication 3, **caractérisé en ce que** la vérification du bon fonctionnement de la porte (16) est effectuée par le capteur de sécurité (24) en fonction de l'enregistrement capturé par la caméra (28) ; les étapes suivantes étant notamment effectuées pour la vérification du bon fonctionnement de la porte (16) :
- l'unité de commande de sécurité (26) ordonne à l'unité de commande de porte (22) de mouvoir le composant de porte (18) afin d'effectuer un mouvement de test spécifique,
- la caméra (28) capture un enregistrement,
- l'unité de commande de sécurité (26) reconnaît le mouvement réel du composant de porte (18) dans l'enregistrement et évalue si ce mouvement réel correspond au mouvement de test, et
- si le mouvement réel correspond au mouvement de test, la vérification est réussie, et si le mouvement réel ne correspond pas au mouvement de test, la vérification échoue, ce qui constitue une condition d'interruption.

9. Procédé selon l'une quelconque des revendications précédentes, **caractérisé en ce que** l'unité de commande de sécurité (26) détecte la présence d'un superviseur à la porte (16) en fonction de l'enregistrement supplémentaire capturé, l'absence d'un superviseur constituant une condition d'interruption, et/ou l'unité de commande de sécurité (26) détecte une personne s'approchant de la porte en fonction de l'enregistrement supplémentaire capturé, une personne s'approchant de la porte constituant une condition d'interruption.

10. Procédé selon l'une quelconque des revendications précédentes, **caractérisé en ce que** l'unité de commande de sécurité (26) comprend un algorithme déterministe adaptatif, un algorithme d'apprentissage automatique, une machine à vecteurs de support et/ou un réseau neuronal artificiel entraîné, configurés et/ou entraînés pour reconnaître une condition d'interruption, un danger, une personne, un superviseur et/ou le mouvement réel du composant de porte (18) dans l'enregistrement capturé, et/ou configurés et/ou entraînés pour estimer la durée pendant laquelle la porte (16) ne sera pas utilisée en fonction de l'enregistrement capturé.

11. Procédé selon l'une quelconque des revendications précédentes, **caractérisé en ce que** l'unité de commande de sécurité (26) reçoit le progiciel de mise à jour par l'intermédiaire d'une connexion sans fil ou filaire, notamment en provenance d'un serveur distant (12) ou d'un appareil mobile (14) situé à proximité du système de porte (10).

12. Système de porte automatique comprenant au moins un composant de porte (18), notamment un vantail mobile, au moins une unité d'actionnement (20) destinée à actionner l'au moins un composant de porte (18), une unité de commande de porte (22) destinée à commander l'unité d'actionnement (20), et un capteur de sécurité (24) présentant une unité de commande de sécurité (26), le système de porte (10) étant configuré pour mettre en œuvre le procédé selon l'une quelconque des revendications précédentes, le capteur de sécurité (24) comprenant notamment une caméra (28).
